# EUROPEAN PATENT APPLICATION

(11) **EP 3 915 852 A1**
(43) Date of publication of application: **01.12.2021**
(21) Application number: 20194829.6
(22) Date of filing: 07.09.2020
(51) Int. Cl.: B60W 60/00, B60W 50/14

(54) **METHOD AND APPARATUS FOR CONTROLLING AUTONOMOUS DRIVING**

(30) Priority: 26.05.2020 KR 20200063149
(71) Applicant: HYUNDAI MOTOR COMPANY, Seoul 06797 (KR); Kia Corporation, Seocho-gu Seoul 06797 (KR)
(72) Inventor: Lee, Dong Hwi, 18280 Gyeonggi-do (KR); Yoo, Su Jung, 18280 Gyeonggi-do (KR)
(74) Representative: Hoffmann Eitle

(57) **Abstract**

An autonomous driving control method for an autonomous driving vehicle is provided. The method may include entering a control transfer standby state when an autonomous driving release button input is detected in an autonomous driving mode, determining whether a driver intervenes in the control transfer standby state, and when the driver is determined to intervene in the control transfer standby state, terminating the control transfer standby state to enter a manual driving mode.

## Description

### CROSS-REFERENCE TO RELATED APPLICATION

The present application claims priority to and the benefit of Korean Patent Application No. 10-2020-0063149, filed on May 26, 2020, which is incorporated herein by reference in its entirety.

### TECHNICAL FIELD

The present disclosure relates to an autonomous driving vehicle control.

### BACKGROUND

The statements in this section merely provide background information related to the present disclosure and may not constitute prior art.

Autonomous driving vehicles require the ability to adaptively respond to surrounding situations that change in real time while driving.

To produce and activate autonomous driving vehicles, first of all, a reliable determination control function is required.

Level 2 autonomous driving systems currently in mass production require a driver's forward gaze, and output a predetermined hand-off warning alarm when the driver does not grip a steering wheel during a specific period while autonomous driving.

Accordingly, the level 2 autonomous driving systems do not need to determine whether the driver is gripping the steering wheel upon switching to manual driving depending on the driver's intent.

Level 3 autonomous driving systems do not require that the driver grips the steering wheel while the autonomous driving function is being performed, may release the autonomous driving function, and may switch to manual driving depending on the driver's intent.

As such, because level 3 autonomous driving systems allow the driver's hand-off when switching from autonomous driving to manual driving, it is necessary to accurately determine whether the driver is ready to perform manual driving.

In the case of current level 3 autonomous driving systems (i.e., a driver is in hands-off), when the autonomous driving mode is immediately released depending on the driver's autonomous driving release button input in a state where the driver does not grip the steering wheel, an autonomous driving system or a driver may cause a instantly dangerous situation in which driving is not controlled.

This may increase the risk of an accident because autonomous driving is released while the driver is not ready for manual driving.

### SUMMARY

An aspect of the present disclosure provides a method and apparatus for controlling autonomous driving.

An aspect of the present disclosure provides a method and apparatus for controlling autonomous driving that may safely transfer control from a system to a driver by identifying the input of an autonomous driving release button and further identifying a driver intervention status.

An aspect of the present disclosure provides a method and apparatus for controlling autonomous driving that may adaptively control transfer of control and autonomous driving based on the driver's steering wheel gripping state and the driver's acceleration/deceleration control state.

An aspect of the present disclosure provides a method and apparatus for controlling autonomous driving that may safely transfer the control by generating a differential warning alarm depending on the driver's intervention status and the passage of time after the input of an autonomous driving release button is identified.

An aspect of the present disclosure provides a method and apparatus for controlling autonomous driving that may safely switch to a manual driving mode by separating the driver's longitudinal and lateral interventions.

An aspect of the present disclosure provides a method and apparatus for controlling autonomous driving that may safely maintain an autonomous driving state even when an autonomous driving release button is input due to the driver's mistake, by setting the waiting time to transfer the control for determining a driver's intervention, after the input of the autonomous driving release button is detected.

An aspect of the present disclosure provides a method and apparatus for controlling autonomous driving that may more accurately and safely determine at the time of transfer of control in SAE level 3 autonomous driving vehicles.

The technical problems to be solved by the present inventive concept are not limited to the aforementioned problems, and any other technical problems not mentioned herein will be clearly understood from the following description by those skilled in the art to which the present disclosure pertains.

According to an aspect of the present disclosure, an autonomous driving control method for an autonomous driving vehicle may include entering a control transfer standby state when an autonomous driving release button input is detected in an autonomous driving mode, determining a driver intervenes, in the control transfer standby state, and terminating the control transfer standby state based on the determination result to enter a manual driving mode.

In an embodiment, the driver intervention may include a longitudinal intervention and a lateral intervention.

In an embodiment, the method may further include terminating the control transfer standby state to enter the manual driving mode when the determination result indicates that the driver intervention is the lateral intervention.

In an embodiment, the method may further include transferring a longitudinal control to the driver and maintaining a lateral control in a system when the determination result indicates that the driver intervention is the longitudinal intervention.

In an embodiment, the method may further include operating a timer for maintaining the control transfer standby state.

In an embodiment, the method may further include releasing the control transfer standby state to maintain the autonomous driving mode when a steering wheel gripping state of the driver is not detected until the timer expires.

In an embodiment, the method may further include outputting a stepwise and differential warning alarm message depending on an operating time of the timer.

In an embodiment, the method may further include outputting a first warning alarm message when the autonomous driving release button input is detected in a state where the driver does not grip a steering wheel, outputting a second warning alarm message when the driver intervention is not detected until a first time elapses after the first warning alarm message is output, outputting a third warning alarm message when the driver intervention is not detected until a second time elapses after the second warning alarm message is output, and outputting a fourth warning alarm message when the autonomous driving release button input is detected in a state where the driver grips the steering wheel.

In an embodiment, the method may further include releasing the control transfer standby state to maintain the autonomous driving mode when the timer expires in a state where a longitudinal control is transferred to the driver and a lateral control is maintained in a system.

In an embodiment, the method may further include causing the autonomous driving vehicle to enter the manual driving mode when the lateral intervention of the driver is detected before the timer expires in a state where a longitudinal control is transferred to the driver and a lateral control is maintained in a system.

According to an aspect of the present disclosure, an autonomous driving control apparatus may include an autonomous driving controller controlling autonomous driving of a vehicle, a steering controller controlling lateral driving of the vehicle, and an acceleration/deceleration controller controlling longitudinal driving of the vehicle. The autonomous driving controller may include a driver intervention determination device determining a driver intervenes during the autonomous driving, and a control device terminating a control transfer standby state and causing the vehicle to enter a manual driving mode, based on the determination result after the control transfer standby state is entered when an autonomous driving release button is inputted in an autonomous driving mode.

In an embodiment, the driver intervention may include a longitudinal intervention and a lateral intervention.

In an embodiment, the control device may terminate the control transfer standby state to cause the vehicle to enter the manual driving mode when the driver intervention is the lateral intervention.

In an embodiment, the control device may transfer a longitudinal control to the driver and may maintain a lateral control in a system when the driver intervention is the longitudinal intervention.

In an embodiment, the control device may operate a timer for maintaining the control transfer standby state.

In an embodiment, the control device may release the control transfer standby state to maintain the autonomous driving mode when a steering wheel gripping state of the driver is not detected until the timer expires.

In an embodiment, the autonomous driving control apparatus may further include a warning alarm device configured to output a stepwise and differential warning alarm message depending on an operating time of the timer.

In an embodiment, the warning alarm device may output a first warning alarm message when receiving a first control signal indicating that the autonomous driving release button input is detected in a state where the driver does not grip a steering wheel, from the driver intervention determination device, may output a second warning alarm message when receiving a second control signal indicating that the driver intervention is not detected until a first time elapses after the first warning alarm message is output, from the driver intervention determination device, may output a third warning alarm message when receiving a third control signal indicating that the driver intervention is not detected until a second time elapses after the second warning alarm message is output, from the driver intervention determination device, and may output a fourth warning alarm message when receiving a fourth control signal indicating that the autonomous driving release button input is detected in a state where the driver grips the steering wheel, from the driver intervention determination device.

In an embodiment, the control device may release the control transfer standby state to maintain the autonomous driving mode when the timer expires in a state where a longitudinal control is transferred to the driver and a lateral control is maintained in a system.

In an embodiment, the control device may cause the vehicle to enter the manual driving mode when the lateral intervention of the driver is detected before the timer expires in a state where a longitudinal control is transferred to the driver and a lateral control is maintained in a system.

The technical problems to be solved by embodiments of the present disclosure are not limited to the aforementioned problems, and other technical problems that are not mentioned will be clearly understood by those skilled in the art from the following description.

### DRAWINGS

The above and other objects, features and advantages of the present disclosure will be more apparent from the following detailed description taken in conjunction with the accompanying drawings:
FIG. 1 is a table, in which an automation level of an autonomous driving vehicle is defined, in one form of the present disclosure;
FIG. 2 is a block diagram illustrating a structure of an autonomous driving control apparatus in one form of the present disclosure;
FIG. 3 is a flowchart illustrating an autonomous driving control method in an autonomous driving control apparatus in one form of the present disclosure;
FIG. 4 is a flowchart for describing an autonomous driving control method in an autonomous driving control apparatus in one form of the present disclosure; and
FIG. 5 is a diagram for describing a warning alarm control method in an autonomous driving control apparatus in one form of the present disclosure.

### DETAILED DESCRIPTION

Hereinafter, exemplary embodiments of the present disclosure will be described in detail with reference to the accompanying drawings. In the drawings, the same reference numerals will be used throughout to designate the same or equivalent elements. In addition, a detailed description of well-known features or functions will be ruled out in order not to unnecessarily obscure the gist of the present disclosure.

In describing elements of exemplary embodiments of the present disclosure, the terms first, second, A, B, (a), (b), and the like may be used herein. These terms are only used to distinguish one element from another element, but do not limit the corresponding elements irrespective of the nature, order, or priority of the corresponding elements. Furthermore, unless otherwise defined, all terms including technical and scientific terms used herein are to be interpreted as is customary in the art to which the present disclosure belongs. It will be understood that terms used herein should be interpreted as having a meaning that is consistent with their meaning in the context of the present disclosure and the relevant art and will not be interpreted in an idealized or overly formal sense unless expressly so defined herein.

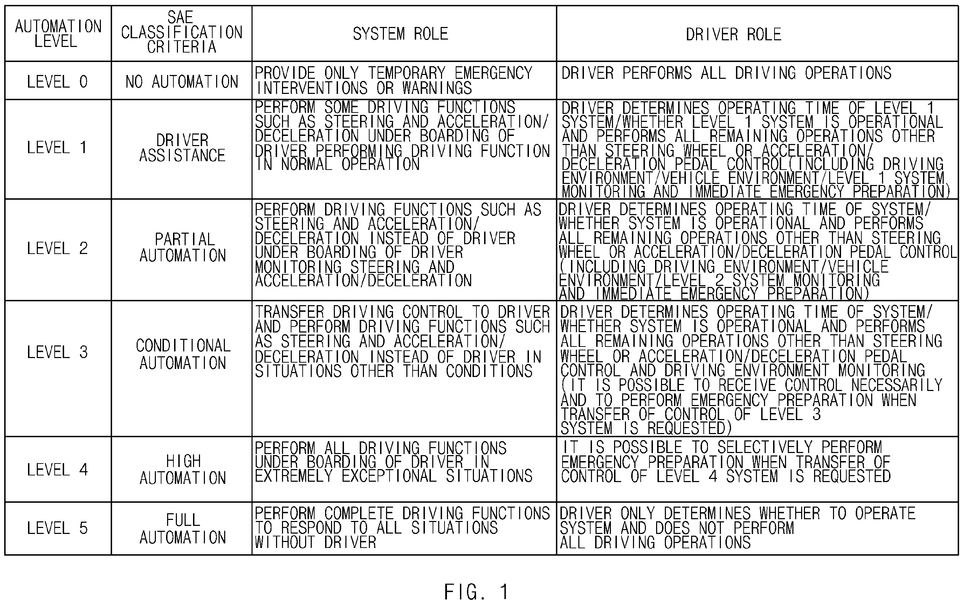

Below, various embodiments of the present disclosure will be described in detail with reference to FIGS. 1 to 5.

FIG. 1 is a table, in which an automation level of an autonomous driving vehicle is defined, according to an embodiment of the present disclosure.

An autonomous driving vehicle means a vehicle that recognizes a driving environment by itself, determines dangers, controls driving routes, minimizes driving operations of a driver, and drives the vehicle itself.

Eventually, the autonomous driving vehicle means a vehicle capable of driving, manipulating, and parking without a driver's intervention, and is focused on a vehicle in which autonomous driving technology (i.e., the ability to drive a vehicle without a driver's active control or monitoring), which is the core foundation of the autonomous driving vehicle, has been developed to the highest level.

However, as illustrated in FIG. 1, the concept of the current autonomous driving vehicle may include the automation step of the middle step to achieve a full-autonomous driving vehicle, and may correspond to a goal-oriented concept presupposing mass production and commercialization of a full-autonomous driving vehicle.

According to an embodiment of the present disclosure, the autonomous driving control method may be applied to an autonomous driving vehicle corresponding to level 3 (conditional automation) among the autonomous driving steps illustrated in FIG. 1, but an embodiment is not limited thereto. The autonomous driving control method may also be applied to an autonomous driving vehicle of another level where control transfer situations may occur.

The automation level of an autonomous driving vehicle based on Society Automotive Engineers (SAE) that is American Automotive Engineers Association may be classified as illustrated in the table of FIG. 1.

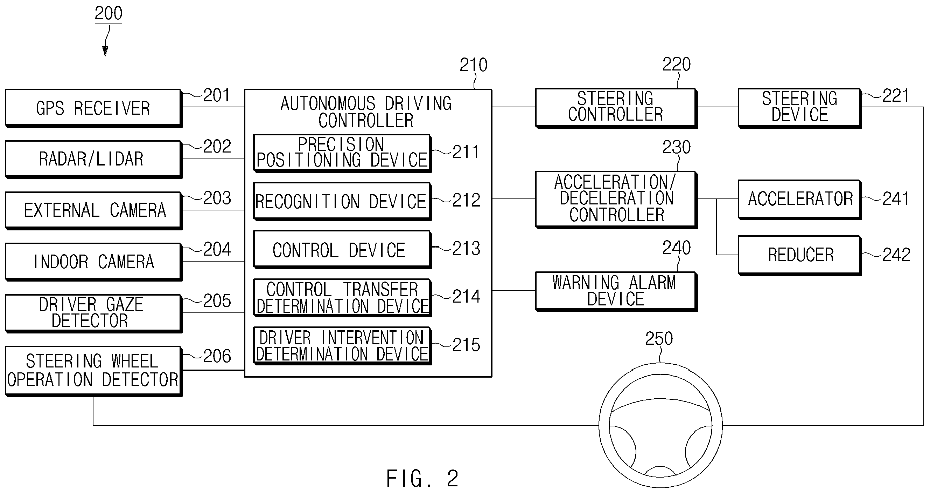

FIG. 2 is a block diagram illustrating a structure of an autonomous driving control apparatus according to an embodiment of the present disclosure.

Referring to FIG. 2, an autonomous driving control apparatus 200 may be configured to include a GPS receiver 201, a radar/lidar 202, an external camera 203, an indoor camera 204, a driver gaze detector 205, a steering wheel operation detector 206, an autonomous driving controller 210, a steering controller 220, a steering device 221, an acceleration/deceleration controller 230, an accelerator 241, a reducer 242, a warning alarm device 240, and a steering wheel 250.

The autonomous driving controller 210 may be configured to include a precision positioning device 211, a recognition device 212, a control device 213, a control transfer determination device 214, and a driver intervention determination device 215.

The components of the autonomous driving control apparatus 200 illustrated in FIG. 2 may not necessarily be all essential components, and may be configured to include components, of which the number is greater or less than the number of components of the autonomous driving control apparatus 200.

The GPS receiver 201 may receive a positioning signal from a positioning satellite. At this time, the location signal may be used to generate geographical position information of the vehicle.

The radar/lidar 202 may detect objects around the vehicle. The radar/lidar 202 may be used to detect an object at the front, side and rear side of the vehicle, to calculate the distance to the detected object, to distinguish whether the detected object is a static object or a dynamic object, to measure which the speed of movement of the detected dynamic object, to distinguish whether the detected dynamic object is a pedestrian or a vehicle, and to identify the conditions of roads and facilities through high-resolution terrain scan.

The external camera 203 may be mounted outside the vehicle to capture images of the front, side, and rear sides of the vehicle. To this end, the plurality of external cameras 203 may be provided in the vehicle. The image captured by the external camera 203 may be used to distinguish lanes, to identify objects around the vehicle, and to implement augmented reality (AR).

The indoor camera 204 is mounted on one side of the interior of the vehicle to capture the driver.

The image captured by the indoor camera 204 may be used to monitor a driver's gaze direction, a driver's drowsy driving, and the like.

The driver gaze detector 205 may detect a gaze direction of the driver by analyzing the image captured by the indoor camera 204 depending on a control signal of the autonomous driving controller 210.

According to an embodiment, the driver gaze detector 205 may adaptively determine the forward gaze of the driver depending on situations.

For example, when a warning alarm (i.e., TD) message for making a request for the transfer of control from the system to the driver due to a forward driving problem (e.g., including dangerous situations such as the emergence of pedestrians/wild animals in the front, finding obstacles, or the like) during autonomous driving is output, in the case where the driver's gaze faces the front of the windshield, the driver gaze detector 205 may determine that the driver's gaze is a forward gaze.

For another example, when the warning of control transfer is caused by vehicle cut-in from the right line during autonomous driving, the driver gaze detector 205 may determine that the driver's gaze in the right direction, which may make it possible to determine that the driver recognizes another vehicle's cut-in from the right side through a windshield, is a forward gaze.

For still another example, when the warning of control transfer is caused by vehicle cut-in from the left line during autonomous driving, the driver gaze detector 205 may determine that the driver's gaze in the left direction, which may make it possible to determine that the driver recognizes another vehicle's cut-in from the left side through a windshield, is a forward gaze.

The steering wheel operation detector 206 may detect the driver's gripping state and operating state of the steering wheel 250.

For example, the steering wheel 250 may be equipped with a sensor (e.g., including at least one of a touch sensor, a pressure sensor, a camera sensor, and a temperature sensor) capable of detecting the gripping state of the steering wheel 250 of the driver. In this case, the steering wheel operation detector 206 may determine the gripping state of the steering wheel 250 of the driver based on sensing information collected from at least one sensor.

For another example, the steering wheel operation detector 206 may detect a torque change of the steering wheel 250 operating in conjunction with the steering controller 220 and (or) the steering device 221. When the torque change of the steering wheel 250 of a predetermined reference value or more is detected, the steering wheel operation detector 206 may determine that the driver operates the steering wheel 250.

However, it is necessary to distinguish whether the driver's steering wheel operation is intentional or inadvertent.

The driver intervention determination device 215 may detect the driver's longitudinal and lateral interventions. For example, the longitudinal intervention may include the driver's excel or brake operation, and the lateral intervention may include the driver's grip or operation of a steering wheel.

In an embodiment, when the driver intervention is the lateral intervention, the control device 213 may terminate the control transfer standby state of and may allow the vehicle to enter a manual driving mode.

In an embodiment, when the driver intervention is a longitudinal intervention, the control device 213 may transfer the longitudinal control to the driver and may maintain the lateral control in the system.

In an embodiment, the control device 213 may drive a timer for maintaining a control transfer standby state.

In an embodiment, when the steering wheel gripping state of the driver is not detected until the timer expires, the control device 213 may release the input of an autonomous driving release button to maintain the autonomous driving mode.

In an embodiment, the warning alarm device 240 may output a stepwise and differential warning alarm message depending on the operating time of the timer.

In an embodiment, when receiving a first control signal indicating that the input of an autonomous driving release button is detected while the driver is not gripping the steering wheel, from the driver intervention determination device 215, the warning alarm device 240 may output a first warning alarm message.

In an embodiment, when receiving a second control signal indicating that the driver intervention is not detected until the first time elapses after the first warning alarm message is output, from the driver intervention determination device 215, the warning alarm device 240 may output a second warning alarm message.

In an embodiment, when receiving a third control signal indicating that the driver intervention is not detected until the second time elapses after the second warning alarm message is output, from the driver intervention determination device 215, the warning alarm device 240 may output a third warning alarm message.

In an embodiment, when receiving a fourth control signal indicating that the input of an autonomous driving release button is detected while the driver is gripping the steering wheel, from the driver intervention determination device 215, the warning alarm device 240 may output a fourth warning alarm message.

In an embodiment, in a state where the longitudinal control is transferred to the driver depending on the longitudinal intervention of the driver and the lateral control is maintained in the system, when the timer expires, the control device 213 may release the input of the autonomous driving release button to maintain the autonomous driving mode.

In an embodiment, in a state where the longitudinal control is transferred to the driver depending on the longitudinal intervention of the driver, and the lateral control is maintained in the system, when the driver's lateral intervention is detected before the timer expires, the control device 213 may enter a manual driving mode.

When the driver's operation of a steering wheel is detected, the driver intervention determination device 215 may determine whether the driver intentionally intervenes in driving to receive the control from a system, by distinguishing whether the corresponding steering wheel operation is intentional or inadvertent.

When the driver's input to an autonomous driving release button is identified, the driver intervention determination device 215 may control the warning alarm device 240 such that a primary warning alarm is output, and then may determine whether the driver grips a steering wheel and whether excel/brake is operated, in conjunction with the steering wheel operation detector 206.

After it is determined that the autonomous driving release button is input, the driver intervention determination device 215 may monitor the steering wheel gripping state of a driver over time, and then may also allow the stepwise and differential second to N-th warning alarms to be output.

After it is determined that the autonomous driving release button is input, the driver intervention determination device 215 may determine whether the driver intentionally controls acceleration/deceleration, in conjunction with the acceleration/deceleration controller 230.

When it is determined that the driver intentionally controls acceleration/deceleration, the driver intervention determination device 215 may transmit a predetermined control signal to the control device 213 to release the control of the longitudinal autonomous driving, and may request the control device 213 to maintain the control of the lateral autonomous driving.

After the driver's input to the autonomous driving release button is identified, when it is identified that the driver grips or operates the steering wheel, the driver intervention determination device 215 may request the control device 213 to completely transfer the control from the system to the driver.

In another embodiment, after the driver's input to the autonomous driving release button is identified, when it is identified that the driver grips or operates the steering wheel and when it is identified that the driver is watching the front, the driver intervention determination device 215 may request the control device 213 to completely transfer the control from the system to the driver.

The precision positioning device 211 may determine the current position of the vehicle, using the positioning signal from the GPS receiver 201 and the pre-stored precision map information, and may map the determined current position of the vehicle onto the precision map.

The recognition device 212 may recognize a line based on sensing information from the radar/lidar 202 and image information captured by the external camera 203 and may identify driving vehicles, obstacles around the vehicle, pedestrians, or the like.

The control device 213 may calculate a request command value based on the recognition result of the recognition device 212 and may transmit the corresponding control signal to the steering controller 220, the acceleration/deceleration controller 230, and the like depending on the calculated requested command value.

The control transfer determination device 214 may determine whether transfer of control from the system to the driver is necessary, based on the recognition result of the recognition device 212, the vehicle's internal state, the driver's input to the autonomous driving release button, or the like.

When the determination result indicates that transfer of control is required, the control transfer determination device 214 may transmit a predetermined control signal to the warning alarm device 240 and may allow a predetermined warning alarm message for making a request for transfer of control right to the driver to be output.

In an embodiment, the driver intervention determination device 215 may differently apply determination criteria of the driver intervention depending on whether a warning alarm message is output. For example, when the warning alarm message is output, the driver intervention determination device 215 may allow the control to be transferred more quickly and accurately.

The steering controller 220 is a controller responsible for the lateral behavior of the autonomous driving vehicle. The steering controller 220 may control the steering device 221 depending on a lateral control request command value transmitted from the control device 213 of the autonomous driving controller 210.

Herein, the steering device 221 may include an actuator for the lateral behavior of the vehicle.

The acceleration/deceleration controller 230 refers to a controller responsible for the longitudinal behavior of the autonomous driving vehicle.

The acceleration/deceleration controller 230 may control the accelerator 241 and (or) the reducer 242 depending on a longitudinal control request command value transmitted from the control device 213 of the autonomous driving controller 210. For example, the accelerator 241 includes a throttle, an accelerator, and the like; the reducer 242 may include a brake for reducing the speed of the vehicle.

Herein, the throttle may control the operating speed and acceleration of an engine and (or) a motor provided in the vehicle.

The detailed operations of the driver intervention determination device 215 and the warning alarm device 240 will be obvious through the description of the drawings to be described later.

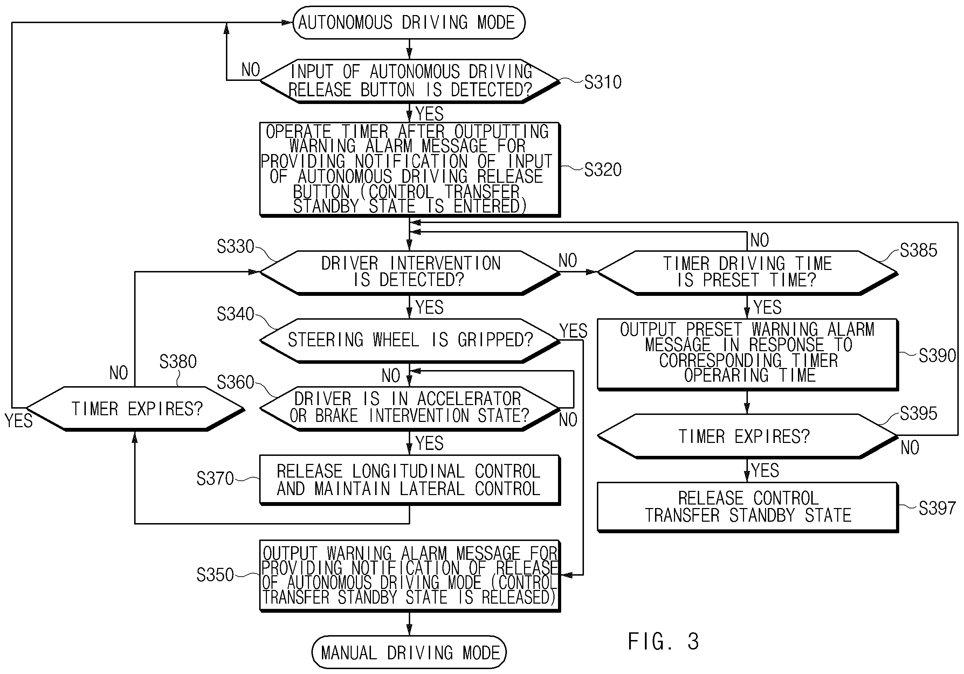

FIG. 3 is a flowchart illustrating an autonomous driving control method in an autonomous driving control apparatus according to an embodiment of the present disclosure.

Referring to FIG. 3, an apparatus 200 may detect an input of an autonomous driving release button in a state where the autonomous driving mode is activated (S310).

When the detection result indicates that the input of an autonomous driving release button is detected, the apparatus 200 may operate a timer after outputting a predetermined warning alarm message indicating that the control transfer standby state (i.e., an autonomous driving release standby state) is entered, depending on the input of the autonomous driving release button (S320).

The apparatus 200 may detect whether a driver intervenes, in the timer operating state (S330).

When driver intervention is detected, the apparatus 200 may determine whether the driver is gripping a steering wheel (S340).

When the determination result indicates that the driver grips the steering wheel, the apparatus 200 may output a predetermined warning alarm message providing a notification of the release of the autonomous driving mode (S350). At this time, the apparatus 200 may release the control transfer standby state and may enter the manual driving mode.

When the determination result in step 340 indicates that the driver is not gripping the steering wheel, the apparatus 200 may determine whether the driver is in an accelerator or brake intervention state (S360).

When the determination result indicates that the driver is in the accelerator or brake intervention state, the apparatus 200 may release the longitudinal control of the vehicle and may maintain the lateral control (S370). That is, because the driver is performing accelerator and brake operations without gripping the steering wheel, the apparatus 200 may maintain the lateral control in the system, and may transfer only the longitudinal control to the driver.

When a timer expires in a state where the lateral control is transferred to the system, and the longitudinal control is transferred to the driver, the apparatus 200 may retrieve the longitudinal control transferred to the driver and may enter the autonomous driving mode (S380). Of course, in a state where the lateral control is transferred to the system, and the longitudinal control is transferred to the driver, the apparatus 200 may continuously detect driver intervention until the expiration of the timer is detected.

When no driver intervention is detected in step 330, the apparatus 200 may determine whether the timer driving time is a preset time (S385).

When the determination result indicates that the timer driving time is the preset time, the apparatus 200 may output a preset warning alarm message in response to the corresponding timer operating time (S390).

The apparatus 200 may detect whether the driver intervenes until the timer expires (S395).

When the timer expires in a state where the driver intervention is not detected, the apparatus 200 may release the control transfer standby state and may maintain the autonomous driving mode as it is (S397).

In an embodiment, when the timer operating time passes the first time in a state where the lateral control is transferred to the system depending on the driver's accelerator or brake intervention, and the longitudinal control is transferred to the driver, the apparatus 200 may output a predetermined warning alarm message for requesting the driver to grip the steering wheel.

When the second time has elapsed after the predetermined warning alarm message for requesting the driver to grip the steering wheel is output and then the timer expires, the apparatus 200 may output a predetermined warning alarm message for providing a notification that the input of the autonomous driving release button is released and then entering the autonomous driving mode again.

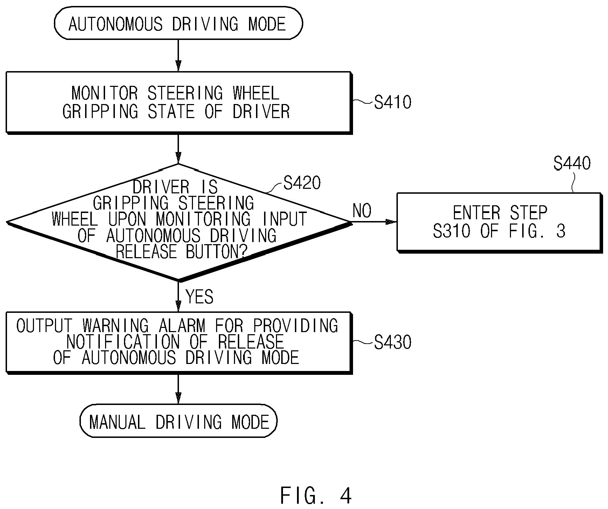

FIG. 4 is a flowchart for describing an autonomous driving control method in an autonomous driving control apparatus according to another embodiment of the present disclosure.

Referring to FIG. 4, the apparatus 200 may monitor the steering wheel gripping state of a driver while the autonomous driving mode is activated (S410).

The apparatus 200 may determine whether the driver is gripping a steering wheel upon monitoring the input of the autonomous driving release button (S420).

When the determination result indicates that the driver grips the steering wheel, the apparatus 200 may immediately enter a manual driving mode after outputting a predetermined warning alarm message for providing a notification of the release of the autonomous driving mode (S430).

When the determination result in step 420 indicates that the driver is gripping the steering wheel, the apparatus 200 may enter step 310 of FIG. 3 (S440).

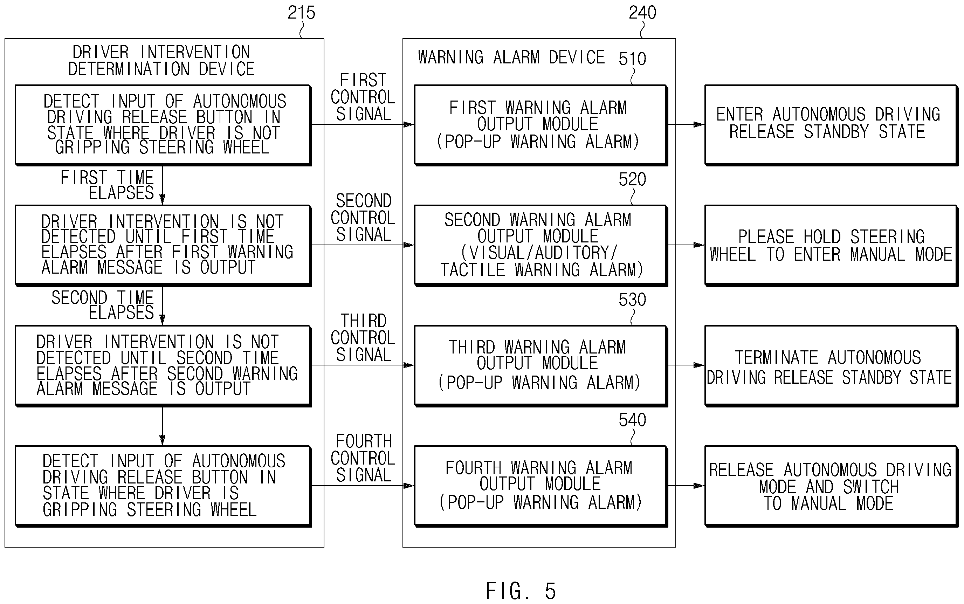

FIG. 5 is a diagram for describing a warning alarm control method in an autonomous driving control apparatus according to an embodiment of the present disclosure.

In detail, FIG. 5 is a diagram for describing how the warning alarm device 240 outputs a warning alarm depending on the control signal of the driver intervention determination device 215.

Referring to FIG. 5, the warning alarm device 240 according to an embodiment may include first to fourth warning alarm output modules 510 to 540.

In an embodiment, when receiving a first control signal indicating that the input of an autonomous driving release button is detected in a state where a driver is not gripping a steering wheel, from the driver intervention determination device 215, the first warning alarm output module 510 may output a first predetermined warning alarm message. For example, the first warning alarm message may be a pop-up message including a message saying that "enter an autonomous driving release standby state."; the first warning alarm message may be output through the display means (e.g., an Audio Video Navigation (AVN) screen, a cluster, a head-up display, or the like) provided in a vehicle.

When receiving a second control signal indicating that the driver intervention is not detected until the first time elapses after the first warning alarm message is output, from the driver intervention determination device 215, the second warning alarm output module 520 may output a second warning alarm message that is recognizable through a visual sense and (or) an auditory sense and (or) a tactile sense.

For example, the second warning alarm message may include at least one of a lighting pattern, a vibration pattern, a warning sound, a voice guidance message, and a text guidance message. Herein, the voice guidance message and (or) a text guidance message may be "please hold the steering wheel to enter the manual mode."

For example, the first time may be 3 seconds, but is not limited thereto, and may be set to a different time period according to designs and (or) standards and (or) legal regulations of those skilled in the art.

When receiving a third control signal indicating that the driver intervention is not detected until the second time elapses after the second warning alarm message is output, from the driver intervention determination device 215, the third warning alarm output module 530 may output a third warning alarm message.

For example, the third warning alarm message may be a pop-up message including a message saying that "terminate the autonomous driving release standby state." and may be output through the display means provided in the vehicle.

For example, the second time may be 2 seconds, but is not limited thereto, and may be set to a different time period according to designs and (or) standards and (or) legal regulations of those skilled in the art.

When receiving a fourth control signal indicating that the input of an autonomous driving release button is detected in a state where a driver is gripping a steering wheel, from the driver intervention determination device 215, the fourth warning alarm output module 540 may output a fourth predetermined warning alarm message.

For example, the fourth warning alarm message may be a pop-up message including a message saying that "release an autonomous driving mode and switch to a manual mode" and may be output through the display means provided in the vehicle.

The operations of the method or algorithm described in connection with the embodiments disclosed in the specification may be directly implemented with a hardware module, a software module, or a combination of the hardware module and the software module, which is executed by the processor. The software module may reside on a storage medium (i.e., the memory and/or the storage) such as a random access memory (RAM), a flash memory, a read only memory (ROM), an erasable and programmable ROM (EPROM), an electrically EPROM (EEPROM), a register, a hard disk drive, a removable disc, or a compact disc-ROM (CD-ROM).

The exemplary storage medium may be coupled to the processor. The processor may read out information from the storage medium and may write information in the storage medium. Alternatively, the storage medium may be integrated with the processor. The processor and storage medium may reside in an application specific integrated circuit (ASIC). The ASIC may reside in a user terminal. Alternatively, the processor and storage medium may be implemented with separate components in the user terminal.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

Therefore, embodiments of the present disclosure are not intended to limit the technical spirit of the present disclosure, but provided only for the illustrative purpose. The scope of protection of the present disclosure should be construed by the attached claims, and all equivalents thereof should be construed as being included within the scope of the present disclosure.

The present disclosure provides a method and apparatus for controlling autonomous driving.

Furthermore, the present disclosure provides a method and apparatus for controlling autonomous driving that may safely transfer control from a system to a driver by identifying the input of an autonomous driving release button and further identifying a driver intervention status.

Also, the present disclosure provides a method and apparatus for controlling autonomous driving that may rapidly and accurately transfer the control by generating a differential warning alarm depending on the driver's steering wheel gripping state and the passage of time after the input of an autonomous driving release button is identified.

Besides, the present disclosure provides a method and apparatus for controlling autonomous driving that may perform active transfer of control by monitoring the driver's steering wheel gripping state over time after the input of the autonomous driving release button is identified, to output a differential warning alarm.

Moreover, the present disclosure provides a method and apparatus for controlling autonomous driving that may safely switch to a manual driving mode by separating the driver's longitudinal and lateral interventions.

In addition, the present disclosure provides a method and apparatus for controlling autonomous driving that may safely maintain an autonomous driving state even when an autonomous driving release button is input due to the driver's mistake, by setting the waiting time to transfer the control for determining a driver's intervention, after the input of the autonomous driving release button is detected.

Furthermore, the present disclosure provides a method and apparatus for controlling autonomous driving that may more accurately and safely determine at the time of transfer of control in SAE level 3 autonomous driving vehicles.

Besides, a variety of effects directly or indirectly understood through the disclosure may be provided.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. An autonomous driving control method for an autonomous driving vehicle, the method comprising:
entering a control transfer standby state when an autonomous driving release button input is detected in an autonomous driving mode;
determining whether a driver intervenes in the control transfer standby state; and
when the driver is determined to intervene in the control transfer standby state, terminating the control transfer standby state to enter a manual driving mode.

2. The method of claim 1, wherein the determination of whether the driver intervenes includes determining whether a driver intervention is a longitudinal intervention or a lateral intervention.

3. The method of claim 2, wherein the method further comprises:
when the driver intervention is determined to be the lateral intervention, terminating the control transfer standby state to enter the manual driving mode; and
when the driver intervention is determined to be the longitudinal intervention, transferring a longitudinal control to the driver and maintaining a lateral control in a system.

4. The method of any one of the preceding claims, wherein the method further comprises:
operating a timer to maintain the control transfer standby state.

5. The method of claim 4, wherein the method further comprises:
when a steering wheel gripping state of the driver is not detected until the timer expires, releasing the control transfer standby state to maintain the autonomous driving mode.

6. The method of claim 4 or 5, wherein the method further comprises:
outputting a stepwise and differential warning alarm message depending on an operating time of the timer.

7. The method of claim 6, wherein the method further comprises:
outputting a first warning alarm message when the autonomous driving release button input is detected in a state where the driver does not grip a steering wheel;
outputting a second warning alarm message when the driver intervention is not detected until a first time elapses after the first warning alarm message is output;
outputting a third warning alarm message when the driver intervention is not detected until a second time elapses after the second warning alarm message is output; and
outputting a fourth warning alarm message when the autonomous driving release button input is detected in a state where the driver grips the steering wheel.

8. The method of any one of claims 4 to 7, wherein the method further comprises:
releasing the control transfer standby state to maintain the autonomous driving mode when the timer expires in a state where a longitudinal control is transferred to the driver and a lateral control is maintained in a system.

9. The method of any one of claims 4 to 8, wherein the method further comprises:
causing the autonomous driving vehicle to enter the manual driving mode when the lateral intervention is detected before the timer expires in a state where a longitudinal control is transferred to the driver and a lateral control is maintained in a system.

10. An autonomous driving control apparatus, the apparatus comprising:
an autonomous driving controller configured to control an autonomous driving of a vehicle;
a steering controller configured to control a lateral driving of the vehicle; and
an acceleration/deceleration controller configured to control a longitudinal driving of the vehicle;
wherein the autonomous driving controller includes:
a driver intervention determination device configured to determine whether a driver intervenes during the autonomous driving; and
a control device configured to:
terminate a control transfer standby state; and
cause the vehicle to enter a manual driving mode after the control transfer standby state is entered when an autonomous driving release button is inputted in an autonomous driving mode.

11. The apparatus of claim 10, wherein the driver intervention includes a longitudinal intervention and a lateral intervention, and wherein the control device is configured to:
terminate the control transfer standby state to cause the vehicle to enter the manual driving mode when the driver intervention is the lateral intervention, and
transfer a longitudinal control to the driver and maintains a lateral control in a system when the driver intervention is the longitudinal intervention.

12. The apparatus of claim 11, wherein the control device is configured to operate a timer to maintain the control transfer standby state, and
release the control transfer standby state to maintain the autonomous driving mode when a steering wheel gripping state of the driver is not detected until the timer expires.

13. The apparatus of claim 12, wherein the apparatus further comprises:
a warning alarm device configured to output a stepwise and differential warning alarm message depending on an operating time of the timer,wherein the warning alarm device is configured to:
output a first warning alarm message when receiving a first control signal indicating that the autonomous driving release button input is detected in a state where the driver does not grip a steering wheel;
output a second warning alarm message when receiving a second control signal indicating that the driver intervention is not detected until a first time elapses after the first warning alarm message is output;
output a third warning alarm message when receiving a third control signal indicating that the driver intervention is not detected until a second time elapses after the second warning alarm message is output; and
output a fourth warning alarm message when receiving a fourth control signal indicating that the autonomous driving release button input is detected in a state where the driver grips the steering wheel.

14. The apparatus of claim 12, wherein the control device is configured to:
release the control transfer standby state to maintain the autonomous driving mode when the timer expires in a state where a longitudinal control is transferred to the driver and a lateral control is maintained in a system.

15. The apparatus of claim 12, wherein the control device is configured to:
cause the vehicle to enter the manual driving mode when the lateral intervention of the driver is detected before the timer expires in a state where a longitudinal control is transferred to the driver and a lateral control is maintained in a system.
